# EUROPÄISCHE PATENTSCHRIFT

(11) **EP 0 511 988 B1**
(45) Veröffentlichungstag und Bekanntmachung des Hinweises auf die Patenterteilung: **07.12.1994**
(21) Anmeldenummer: 91902303.6
(22) Anmeldetag: 22.01.1991
(51) Int. Cl.: B01D 61/00

(54) **DICHTUNGSRAHMEN FÜR MEMBRANSTAPEL**
SEALING FRAME FOR A STACK OF MEMBRANES
CADRE D'ETANCHEITE POUR EMPILEMENT DE MEMBRANES

(30) Priorität: 26.01.1990 DE 4002295
(43) Veröffentlichungstag der Anmeldung: 11.11.1992
(73) Patentinhaber: GKSS-FORSCHUNGSZENTRUM GEESTHACHT GMBH, D-21502 Geesthacht (DE)
(72) Erfinder: KNEIFEL, Klemens, D-2054 Geesthacht (DE); MARTENS, Uwe, D-2059 Hohnsdorf (DE); BEHLING, Dieter, D-2000 Hamburg 55 (DE)
(74) Vertreter: Niedmers, Ole, Dipl.-Phys.
(86) Internationale Anmeldenummer: DE9100057
(87) Internationale Veröffentlichungsnummer: WO9111248

(56) Entgegenhaltungen:
- EP-A- 0 095 583
- DE-A- 2 902 247
- DE-A- 3 103 464
- US-A- 4 569 747
- US-A- 4 786 393

## Beschreibung

Die Erfindung betrifft einen Dichtungsrahmen für alternierend angeordnete Membranen eines Membranstapels insbesondere für die Dialyse oder Elektrodialyse, der aus einem als Abstandshalter dienenden Netzgewebe besteht, das einen konturierten, dichtenden Rahmenrand aufweist, welcher eine in entsprechender Weise konturierte Kammer umschließt, wobei dieser Rahmenrand eine Mehrzahl durchgehender Versorgungs- und Verbindungsbohrungen für die zu behandelnde Lösung und die mit abgetrennten gelösten Elektrolyten bzw. elektrisch nicht geladenen gelösten Stoffen angereicherte bzw. abgereicherte Lösung enthält, und die Bohrungen über Zu- und Ablußrinnen mit dem Inneren der Kammer in Verbindung stehen.

Ein Dichtungsrahmen dieser Art ist bekannt (DE-A-31 03 464). Bei der Elektrodialyse befinden sich zwischen zwei an einer elektrischen Spannung liegenden Elektroden eine Mehrzahl von Kammern, die gegeneinander durch gestapelt angeordnete Dichtungsrahmen und Membranen voneinander getrennt sind. Bei den Membranen handelt es sich um abwechselnd angeordnete Kationen-Austauschermembranen und Anionen-Austauschermembranen. Die Innenfläche eines jeden Dichtungsrahmens enthält einen netzartigen Abstandshalter, der einerseits zur Abstützung der an beiden Seiten angrenzenden Membranen und andererseits zur Verteilung der flächig durchgeleiteten Lösung dient. Der Dichtrahmen soll zudem die Trennung des zu verdünnenden Flüssigkeitsstromes von dem zu konzentrierenden Flüssigkeitsstrom bewirken. Damit die Kammern eines Membranstapels abwechselnd von den beiden Flüssigkeitsströmen durchströmt werden können, enthalten die Dichtungen sowohl Auslauföffnungen für die Zufuhr der einen Lösung in die entsprechende Kammer als auch Bohrungen für den Durchtritt der anderen Lösungen in die nächste Kammer.

Um inneren Leckagen in einem Membranstapel zwischen dem zu verdünnenden Flüssigkeitsstrom und dem zu konzentrierenden Flüssigkeitsstrom auf alle Fälle zu vermeiden, da diese den Wirkungsgrad des Membranstapels erheblich beeinflussen, sind extrem großen Anpreßkräfte der einzelnen Elemente des Membranstapels nötig, um eine ausreichende Dichtwirkung zu erzielen. Dieses kann bei dem bekannten Dichtrahmen nur mit sehr großem apparativen Aufwand sichergestellt werden. Aus diesem Grunde wurde bei dem bekannten Dichtungsrahmen auf den harten, aus formstabilem Kunststoff bestehenden Rand gesondertes elastisches Material aufgebracht, wobei dieses elastische Material als Dichtung wirkte. Zuvor wurden aber die Ränder des netzförmigen Abstandshalter auf eine die Dicke des aus Kunststoff bestehenden Rahmens derart komprimiert, daß die Dicke des in der Kammer liegenden nicht komprimierten Teiles des Abstandshalters im wesentlichen der Dicke des mit Dichtungen versehenen Dichtrahmens entsprach.

Das Komprimieren der Ränder des netzförmigen Abstandshalters vor dem Ein- bzw. Aufbringen des Dichtmaterials ist arbeitstechnisch sehr aufwendig, da dazu eine extrem genaue Ausrichtung des Dichtungsrahmens im Werkzeug, das die Kompression der Ränder bewirken soll, erforderlich ist. Zudem muß beim Kompressionsvorgang fortwährend eine gleiche Werkstoffdicke erzielt werden, d.h. dieser Verfahrensschritt ist ebenfalls mit hoher Sorgfalt durchzuführen, was wiederum zu einer Kostensteigerung bei der Herstellung derartiger Dichtungsrahmen führt.

Es ist Aufgabe der vorliegenden Erfindung einen Dichtungsrahmen zu schaffen, der sich im Vergleich zu dem bekannten Dichtungsrahmen sehr viel einfacher und kostengünstiger herstellen läßt, der eine gegenüber dem bekannten Dichtungsrahmen gleiche oder bessere Dichtwirkung zeigt und für die Herstellung geringere Werkstoffmengen benötigt als vergleichbare bekannte Dichtungsrahmen.

Gelöst wird die Aufgabe gemäß der Erfindung dadurch, daß das Netzgewebe eine konstante Dicke aufweist und daß die Randbereiche des Netzgewebes zur Schaffung des Rahmenrandes und einer Dichtung wenigstens teilweise ausschließlich in einem elastomeren Werkstoff eingebettet sind, wobei die Dicke des elastomeren Werkstoffs größer als die Dicke des Netzgewebes ist.

Verbindung zwischen Abstandshalter und gesondertem Randbereich ist beim erfindungsgemäßen Dichtungsrahmen ebenfalls überflüssig geworden, so daß im wesentlichen nur noch zwei Werkstoffe für die Herstellung des kompletten Dichtungsrahmens erforderlich sind, nämlich einerseits der Werkstoff für den netzförmigen Abstandshalter und der elastomere Werkstoff, der im Randbereich des netzförmigen Abstandshalters die eigentliche Dichtung bildet.

Gemäß einer vorteilhaften Ausgestaltung des Dichtungsrahmens weist der Randbereich linienförmige Dichtungen auf, die aus dem gleichem Werkstoff wie der Werkstoff des übrigen Randbereiches bestehen. Diese linienförmigen Dichtungen, die auf geeignete Weise die Versorgungs- und Verbindungsbohrungen, die den Dichtungsrahmen durchqueren, ganz oder teilweise umschließen, sind im Querschnitt gewissermaßen signifikante Erhöhungen des an sich gleichmäßig dick mit elastomerem Werkstoff erfindungsgemäß aufgefüllten Randbereiches des Dichtungsrahmens.

Diese gesonderten Dichtungen können vorteilhafterweise durch Ausbildung von entsprechenden Vertiefungen in einer ebenen Unterlage hergestellt werden, auf die das im Randbereich aufzufüllende netzförmige Abstandshaltergewebe aufgelegt wird. Die Vertiefungen sind, beispielsweise durch entsprechende Fräsungen oder Ätzungen in der ebenen Unterlage ausgebildet. Durch Aufbringen des elastomeren Werkstoffes und ein damit einhergehendes Hineindrücken in die Vertiefungen wird somit in einem einzigen Arbeitsgang und damit extrem kostengünstig, der Randbereich flächig aufgefüllt und die gewünschte linienförmige Dichtkontur vorteilhafterweise ausgebildet.

Grundsätzlich kann das Aufbringen des elastomeren Werkstoffes auf bzw. Einbringen in den Randbereich des netzförmigen Abstandshalters auf beliebige geeignete Weise erfolgen. Neben einem vorteilhaften Auf- bzw. Einbringen des elastomeren Werkstoffes in den Randbereich des netzförmigen Abstandshalters mittels des Siebdruckverfahrens kann es auch vorteilhaft sein, den elastomeren Werkstoff mittels der Einpress-, Eingieß-oder Einspritztechnik auf bzw. einzubringen, wobei die Wahl dieser Technik auch von der Art des verwendeten elastomeren Werkstoffes abhängig sein kann.

Gemäß einer weiteren vorteilhaften Ausgestaltung der Erfindung kann das Auf- bzw. Einbringen des elastomeren Werkstoffes zum Erreichen einer vorbestimmten Querschnittsform des Randbereiches des Dichtungsrahmens auch in mehreren Schritten nacheinander erfolgen, wobei dieses gleichermaßen vorteilhafterweise sowohl für eine linienförmige Dichtung als auch für den mit elastomerem Werkstoff an- bzw. eingefüllte Randbereich an sich gilt, wobei diese Technik vorteilhafterweise dann angewendet wird, wenn der elastomere Werkstoff bei einmaligem, verhältnismäßig dickem Aufbringen nach seiner Aushärtung einen zu großen Dickenschwund aufweist, vorbestimmte Dicken des Randbereiches aber erreicht werden müssen.

Als elastomerer Werkstoff werden vorteilhafterweise Silikone und/oder Polyurethane eingesetzt. Fluoruierte elastomere Werkstoffe und Silikone eignen sich insbesondere für den Einsatz in aggressiven Medien und auch bei erhöhten Temperaturen. Der elastomere Werkstoff kann vorteilhafterweise ebenfalls geschäumt sein.

Grundsätzlich sind die Dicke des Abstandshalters und des darüber hinausgehenden elastomeren Randbereiches voneinander unabhängig, d. h. daß die Dicke des über die Dicke des Netzgewebes hinausgehenden Randbereiches in jedem Fall 0,05 bis 0,5 mm, vorzugsweise 0,1 bis 0,15 mm beträgt.

Die Erfindung wird nun unter Bezugnahme auf die nachfolgenden schematischen Zeichnungen anhand mehrerer Ausführungsbeispiele beschrieben. Darin zeigen:
- Fig. 1: eine erste Ausführungsform des Dichtungsrahmens in der Draufsicht, bei dem auf den aufgefüllten Randbereich zusätzliche linienförmige Dichtungen aufgebracht sind,
- Fig. 2: eine andere Ausführungsform des Dichtungsrahmens in der Draufsicht, bei dem der Randbereich nicht vollständig mit elastomerem Werkstoff angefüllt ist sondern lediglich in Form von geeignet konturierten linienförmigen Dichtungen gestaltet ist,
- Fig. 3: einen Schnitt entlang der Linie A-B von Fig. 1 im Ausschnitt,
- Fig. 4: einen Schnitt entlang der Linie C-D von Fig. 2 im Ausschnitt,
- Fig. 5: im Schnitt den Aufbau mehrerer Dichtungsrahmen gemäß Fig. 2 im Zusammenwirken mit mehreren Membranen im Ausschnitt,
- Fig. 6: im Schnitt den Aufbau mehrerer Dichtungsrahmen gemäß Fig. 1 im Zusammenwirken mit mehreren Membranen im Ausschnitt und
- Fig. 7: im Schnitt den Dichtungsrahmen und eine Herstellungsunterlage im Ausschnitt.

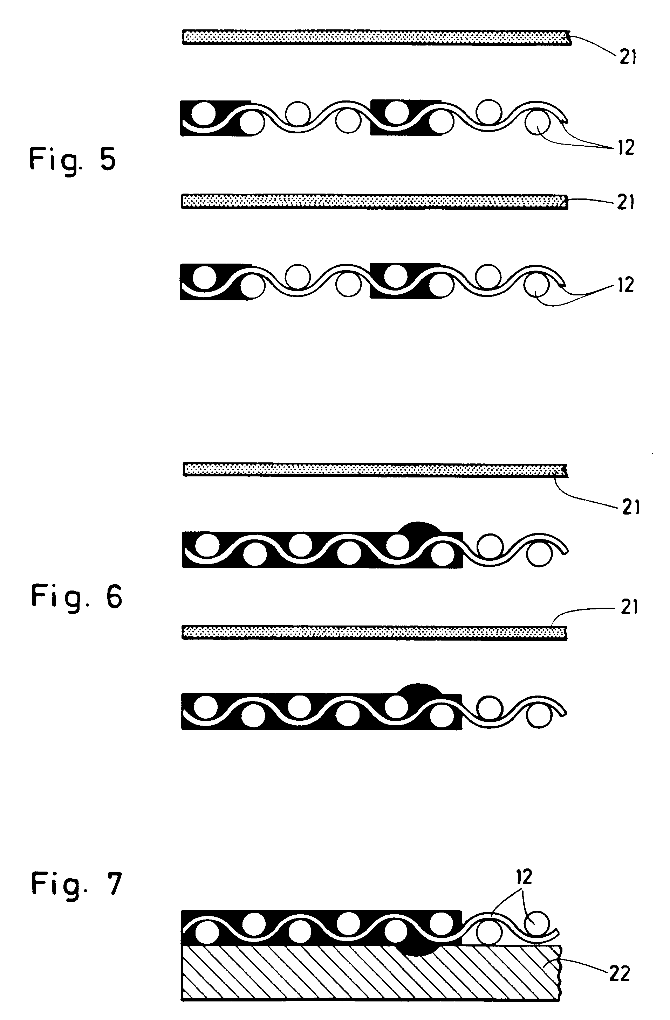

Der Dichtungsrahmen besteht im wesentlichen aus einem netzförmigen Abstandshalter 12, in dem eine Mehrzahl von Versorgungsbohrungen 14, Verbindungsbohrungen 15 sowie Zu- und Ablußrinnen 16, 17 im wesentlichen gegenüberliegend ausgebildet sind. Der grundsätzliche Aufbau eines Dichtungsrahmens 10 und sein Zusammenwirken mit Membranelementen 21 sowie die Art und Weise, wie ein Elektrodialyse-Membranstapel aufgebaut ist, bei dem die erfindungsgemäßen Dichtrahmen zusammen mit den Membranelementen aufgenommen sind, ergibt sich aus den Fig. 5 und 6 sowie der DE-PS 29 02 247, auf die diesbezüglich Bezug genommen wird.

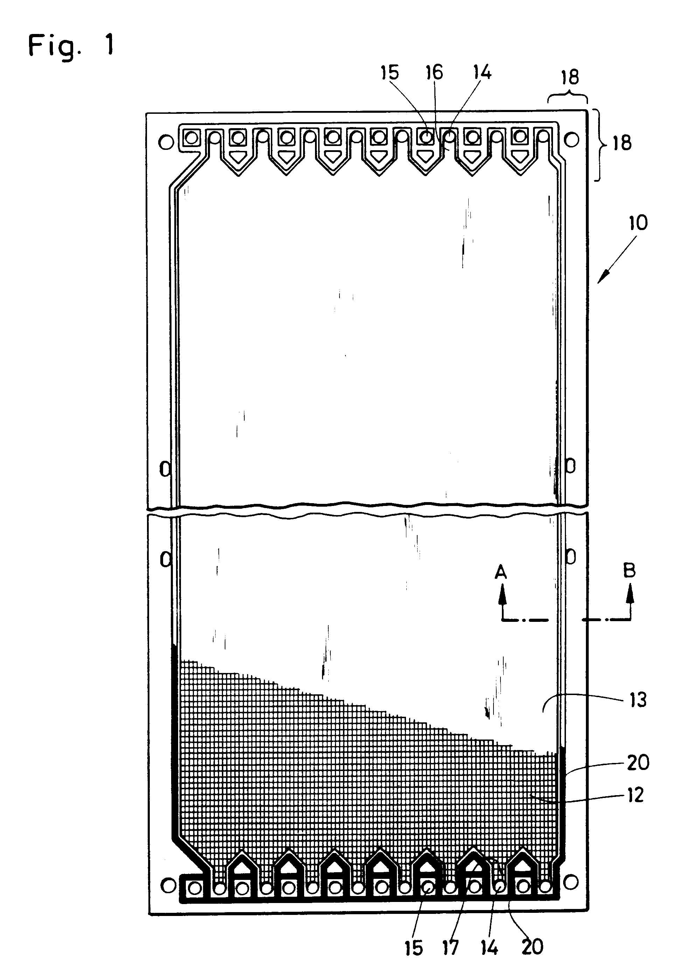

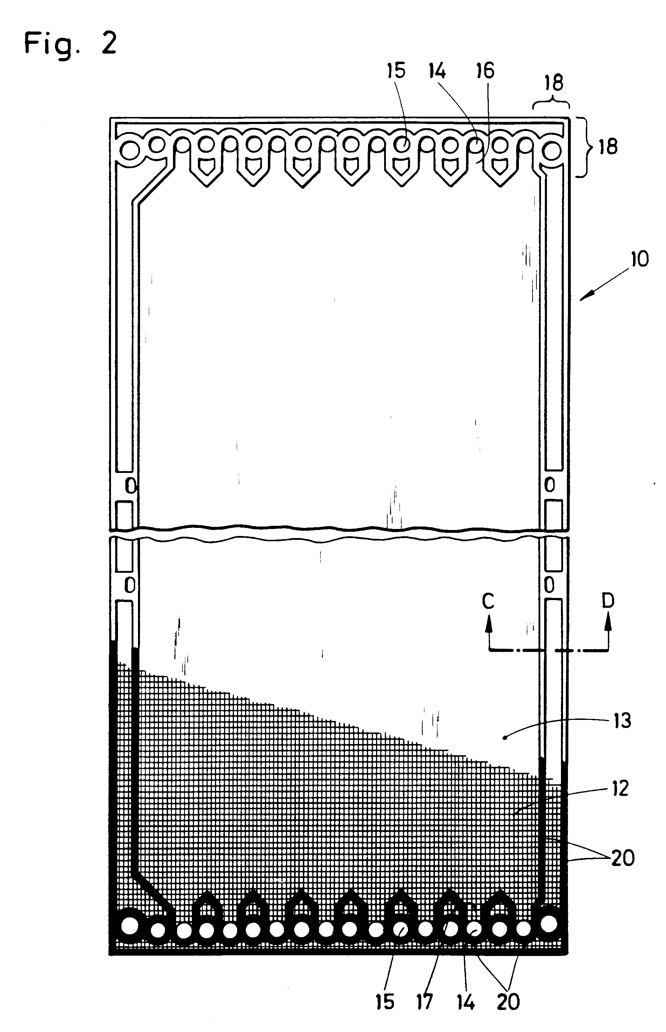

Der in den Fig. 1 und 2 dargestellte Dichtungsrahmen 10 ist eine Verkleinerung des Originals, wobei die tatsächlichen Dimensionen des Dichtungsrahmens 10 von der Art und den Anwendungskriterien derartiger Membranstapel abhängen und variieren können.

Der den netzförmigen Abstandshalter 12, der hier rechteckig ausgebildet ist, umgebende Randbereich 18 ist mit einem elastomeren Werkstoff, beispielsweise einem Silikon, einem Polyurethan oder einem anderen elastomeren Werkstoff aufgefüllt. Der elastomere Randbereich 18 umschließt geeignet ausgeformte Verbindungsbohrungen 15 und teilweise Versorgungsbohrungen 14, die über jeweilige Zu- und Abflußrinnen 16, 17 mit dem von elastomeren Werkstoff freien Inneren des netzförmigen Abstandshalters 12 in Verbindung stehen, wobei dieses Innere die eigentliche Kammer 13 bildet. Die Dichtungsrahmen 10 sind zusammen mit den jeweilig angrenzenden Membranelementen derart gestapelt, daß die Kammern 13 eines Membranstapels abwechselnd von beiden Flüssigkeitsströ-men (zu verdünnender Flüssigkeitsstrom; zu konzentrierender Flüssigkeitsstrom) durchströmt werden, wobei die in den Dichtungsrahmen 10 ausgebildeten Abflußrinnen 17 und die damit verbundenen Versorgungsbohrungen für die Zuführung der jeweiligen Lösung in die entsprechende Kammer 13 sorgen. Die Verbindungsbohrungen 15 sorgen für den Durchtritt der anderen Lösung in die nächste Kammer 13.

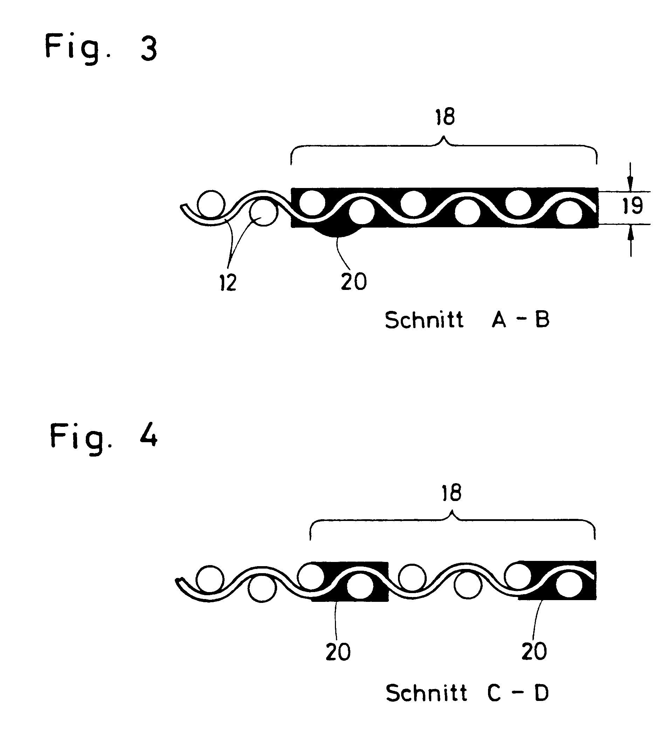

Der Randbereich 18 des netzförmigen Abstandshalters 12 ist zur Schaffung einer Dichtung wenigstens mit dem elastomeren Werkstoff derart angefüllt, daß die Gesamtdicke des Abstandshalters geringfügig dicker als die Dicke des netzförmigen Abstandshalters 12 ist, vergl. Fig. 3 und 4.

Bei dem in Fig. 1 dargestellten Ausführungsbeispiel ist der Randbereich 18 zusätzlich mit linienförmigen Dichtungen 20 versehen, die aus dem gleichen Werkstoff wie der Werkstoff des Randbereiches 18 bestehen. Dieser zusätzliche linienförmige Dichtungsbereich 20 ist insbesondere in Fig. 3 und 6 im Schnitt ersichtlich, wobei diese zusätzlich linienförmige Dichtung bei dem in Fig. 3 und 6 dargestellten Ausführungsbeispiel einen kreisabschnittförmigen Querschnitt aufweist. Grundsätzlich kann die linienförmige Dichtung 20 aber beliebige geeignete Querschnittsformen aufweisen, beispielsweise in Form einer rechteckigen Erhöhung oder auch in Form eines trapezförmig oder dreieckförmigen Querschnitts.

Bei dem in Fig. 2 dargestellten Ausführungsbeispiel sind die äußeren Randbereiche 18 lediglich teilweise, d.h. gegenüber dem Ausführungsbeispiel von Fig. 1 nicht durchgehend, mit einem elastomeren Werkstoff angefüllt, wobei diese Teilrandbereiche 18 selbst die eigentliche Dichtung bilden, vergl. auch die Darstellung von Fig. 2, die einen Schnitt entlang der Linie C-D von Fig. 2 zeigt. Auch hier ist die Dicke des mit elastomerem Werkstoff angefüllten Randbereichs 18 geringfügig dicker als die Dicke des netzförmigen Abstandshalters selbst.

Es sei erwähnt, daß beispielsweise die linienförmige zusätzliche Dichtung 20 auch, im Gegensatz zu Fig. 3, auf beiden Seiten des Dichtungsrahmens 10 angeordnet sein kann. Es ist auch möglich, die eine Seite eines Dichtungsrahmens 10 gemäß der Ausbildung von Fig. 2 auszubilden und die andere Seite gemäß der Ausbildung des Dichtungsrahmens 10 von Fig. 1.

### Bezugszeichenliste

- 10: Dichtungsrahmen
- 11:
- 12: netzförmiger Abstandshalter
- 13: Kammer
- 14: Versorgungsbohrung
- 15: Verbindungsbohrung
- 16: Zuflußrinne
- 17: Abflußrinne
- 18: Randbereich
- 19: Dicke
- 20: linienförmige Dichtung
- 21: Membranelement
- 22: Unterlage für die Herstellung

## Patentansprüche

1. Dichtungsrahmen (10) für alternierend angeordnete Membranen eines Membranstapels, insbesondere für die Dialyse oder Elektrodialyse, der aus einem als Abstandshalter (12) dienenden Netzgewebe besteht, das einen konturierten, dichtenden Rahmenrand aufweist, welcher eine in entsprechender Weise konturierte Kammer (13) umschließt, wobei dieser Rahmenrand durchgehende Versorgungs- und Verbindungsbohrungen (14, 15) für die zu behandelnde Lösung und die mit abgetrennten gelösten Elektrolyten bzw. elektrisch nichtgeladenen gelösten Stoffen angereicherte bzw. angereichterte Lösung enthält, und die Bohrungen über Zu- und Abflußrinnen (16, 17) mit dem Inneren der Kammer in Verbindung stehen, dadurch gekennzeichnet, daß das Netzgewebe eine konstante Dicke aufweist und daß die Randbereiche (18) des Hetzgewebes zur Schaffung des Rahmenrandes und einer Dichtung wenigstens teilweise ausschließlich in einem elastomeren Werkstoff eingebettet sind, wobei die Dicke des elastomeren Werkstoffes größer als die Dicke (19) des Netzgewebes ist.

2. Dichtungsrahmen nach Anspruch 1, dadurch gekennzeichnet, daß die Dichtung linienförmig ausgebildet ist.

3. Dichtungsrahmen nach Anspruch 1, dadurch gekennzeichnet, daß der Randbereich (18) zusätzliche linienförmige Dichtungen (20) aufweist, die aus gleichem Werkstoff wie der Werkstoff des Randbereiches (18) bestehen.

4. Dichtungsrahmen nach einem oder mehreren der Ansprüche 1 oder 3, dadurch gekennzeichnet, daß der elastomere Werkstoff in den Randbereichen (18) mittels der Siebdrucktechnik aufgebracht wird.

5. Dichtungsrahmen nach einem oder mehreren der Ansprüche 1 bis 3, dadurch gekennzeichnet, daß der elastomere Werkstoff in den Randbereich (18) mittels der Einpress-, Eingieß- oder Einspritztechnik aufgebracht wird.

6. Dichtungsrahmen nach einem oder mehreren der Ansprüche 1 bis 5, dadurch gekennzeichnet, daß das Aufbringen des elastomeren Werkstoffes zum Erreichen einer vorbestimmten Querschnittsform des Randbereiches (18) mehrfach ausführbar ist.

7. Dichtungsrahmen nach einem oder mehreren der Ansprüche 1 bis 6, dadurch gekennzeichnet, daß der elastomere Werkstoff Silikon ist.

8. Dichtungsrahmen nach einem oder mehreren der Ansprüche 1 bis 7, dadurch gekennzeichnet, daß der elastomere Werkstoff Polyurethan ist.

9. Dichtungsrahmen nach einem oder mehreren der Ansprüche 1 bis 8, dadurch gekennzeichnet, daß der elastomere Werkstoff geschäumt ist.

10. Dichtungsrahmen nach einem oder mehreren der Ansprüche 1 bis 9, dadurch gekennzeichnet, daß die Dicke des elastomeren Werkstoffs des Randbereiches (18) zwischen 0,05 und 0,5 mm über der Dicke des netzförmigen Abstandshalters (12) liegt.

11. Dichtungsrahmen nach Anspruch 10, dadurch gekennzeichnet, daß die Dicke des elastomeren Werkstoffs zwischen 0,1 und 0,15 mm über der Dicke des netzförmigen Abstandshalters liegt.

12. Dichtungsrahmen nach einem oder mehreren der Ansprüche 1 bis 11, dadurch gekennzeichnet, daß die Dicke des netzförmigen Abstandshalters zwischen 0,3 und 2,0 mm beträgt.

## Claims

1. A sealing frame (10) for alternately disposed membranes of a stack of membranes, particularly for dialysis or electrodialysis and which consists of a mesh which serves as a spacing member (12) and which has a contoured sealing-tight frame rim which surrounds a correspondingly contoured chamber (13), whereby said frame rim has continuous supply and connecting bores (14, 15) for the solution to be treated and the enriched solution or solution enriched with separated-off dissolved electrolytes or electrically non-charged dissolved substances, the bores being connected to the interior of the chamber through supply and discharge channels (16, 17), characterised in that the mesh is of a constant thickness and in that the marginal areas (18) of the mesh are, in order to make the frame rim and a seal, at least to a certain extent embedded solely in an elastomeric material, the thickness of the elastomeric material being greater than the thickness (19) of the mesh.

2. A sealing frame according to claim 1, characterised in that the seal is of linear construction.

3. A sealing frame according to claim 1, characterised in that the marginal area (18) has additional linear seals (20) which consist of the same material as the marginal area (18).

4. A sealing frame according to one or more of claims 1 or 2, characterised in that the elastomeric material is applied to the marginal areas (18) by a screen printing process.

5. A sealing frame according to one or more of claims 1 to 3, characterised in that the elastomeric material is applied to the marginal area (18) by a pressing-in, pouring-in or injection process.

6. A sealing frame according to one or more of claims 1 to 5, characterised in that the application of the elastomeric material can be performed several times in order to achieve a predetermined cross-sectional form in the marginal area (18).

7. A sealing frame according to one or more of claims 1 to 6, characterised in that the elastomeric material is silicone.

8. A sealing frame according to one or more of claims 1 to 7, characterised in that the elastomeric material is polyurethane.

9. A sealing frame according to one or more of claims 1 to 8, characterised in that the elastomeric material is foamed.

10. A sealing frame according to one or more of claims 1 to 9, characterised in that the thickness of the elastomeric material in the marginal area (18) is between 0.05 and 0.5 mm above the thickness of the net-like spacing means (12).

11. A sealing frame according to claim 10, characterised in that the thickness of the elastomeric material is between 0.1 and 0.15 mm above the thickness of the net-like spacing means.

12. A sealing frame according to one or more of claims 1 to 11, characterised in that the thickness of the net-like spacing means is between 0.3 and 2 mm.

## Revendications

1. Cadre d'étanchéité (10) pour des membranes disposées alternativement pour former un empilement en particulier pour la dialyse ou l'électrodialyse, se composant d'un tissu réticulé servant d'élément de retenue (12), qui présente sur son pourtour une bordure en forme de cadre assurant l'étanchéité, cette bordure entourant de manière correspondante une chambre (13) et comprenant des trous (14, 15) d'alimentation et de liaison pour les solutions à traiter et les solutions enrichies ou à enrichir et pour des substances comportant des électrolytes dissous ou des substances dissoutes électriquement, les trous étant reliés à l'intérieur de la chambre par des conduits (16, 17) d'écoulement et d'alimentation, caractérisé en ce que le tissu réticulé présente une épaisseur constante, et en ce que la zone de bordure (18) du tissu réticulé est au moins en partie encastrée exclusivement au sein d'un matériau élastomère, pour réaliser la bordure en forme de cadre et la garniture d'étanchéité, l'épaisseur du matériau élastomère étant plus importante que l'épaisseur (19) du tissu réticulé.

2. Cadre selon la revendication 1, caractérisé en ce que la garniture d'étanchéité est réalisée en forme de ligne.

3. Cadre selon la revendication 1, caractérisé en ce que la zone de bordure (18) présente des garnitures (20) d'étanchéité supplémentaires en forme de ligne, qui se composent du même matériau que celui de la zone de bordure (18).

4. Cadre selon l'une ou plusieurs des revendications 1 ou 3, caractérisé en ce que le matériau élastomère est rapporté sur la zone de bordure (18) par sérigraphie.

5. Cadre selon l'une ou plusieurs des revendications 1 à 3, caractérisé en ce que le matériau élastomère est rapporté sur la zone de bordure (18) par enfoncement, scellement ou injection.

6. Cadre selon l'une ou plusieurs des revendications 1 à 5, caractérisé en ce que le matériau élastomère est rapporté en plusieurs étapes, afin d'obtenir une zone de bordure (18) de section transversale prédéterminée.

7. Cadre selon l'une des revendications 1 à 6, caractérisé en ce que le matériau élastomère est de la silicone.

8. Cadre selon l'une des revendications 1 à 6, caractérisé en ce que le matériau élastomère est du polyuréthane.

9. Cadre selon l'une des revendications 1 à 6, caractérisé en ce que le matériau élastomère est moussé.

10. Cadre selon l'une des revendications 1 à 9, caractérisé en ce que l'épaisseur du matériau élastomère de la zone de bord, est supérieure de 0,05 à 0,5 mm à l'épaisseur de l'élément de retenue (12) en forme de filet.

11. Cadre selon la revendication 1, caractérisé en ce que l'épaisseur du matériau élastomère de la zone de bord, est supérieure de 0,1 à 0,15 mm à l'épaisseur de l'élément de retenue (12) en forme de filet.

12. Cadre selon l'une des revendications 1 à 11, caractérisé en ce que l'épaisseur de l'élément de retenue en forme de filet est comprise entre 0,3 et 2,0 mm.
